# EUROPÄISCHE PATENTSCHRIFT

(11) **EP 2 620 391 B1**
(45) Veröffentlichungstag und Bekanntmachung des Hinweises auf die Patenterteilung: **18.06.2014**
(21) Anmeldenummer: 12153133.9
(22) Anmeldetag: 30.01.2012
(51) Int. Cl.: B65G 1/04

(54) **Verfahren zum Auslagern von Arzneimittelpackungen**
Method for removing packets of medicine
Procédé destiné à déstocker des emballages de médicaments

(43) Veröffentlichungstag der Anmeldung: 31.07.2013
(73) Patentinhaber: CareFusion Germany 326 GmbH, 53539 Kelberg (DE)
(72) Erfinder: Hellenbrand, Christoph, 56761 Kaifenheim (DE); Klapperich, Andreas, 56745 Rieden (DE); Reif, Dennis, 56759 Kaisersesch (DE)
(74) Vertreter: Zenz

(56) Entgegenhaltungen:
- DE-A1-102005 063 197
- DE-U1-202004 004 292
- FR-A1- 2 608 567
- JP-A- 58 026 702
- US-A1- 2008 044 262

## Beschreibung

Die vorliegende Erfindung betrifft ein Verfahren zum Auslagern von Arzneimittelpackungen. Insbesondere betrifft die vorliegende Erfindung ein Verfahren zum Auslagern von Arzneimittelpackungen aus einer Apothekenkommissioniervorrichtung mit zumindest einer Regalreihe mit jeweils einer Mehrzahl von sich in einer horizontalen Richtung erstreckenden Regalböden und einer Mehrzahl von sich in einer vertikalen Richtung erstreckenden Regalwänden, zumindest einem vor der Regalreihe horizontal und vertikal verfahrbaren Bediengerät, wobei das Bediengerät eine Greifvorrichtung bzw. einen Greifer zum Ein- und/oder Auslagern von Arzneimittelpackungen auf die bzw. von den Regalböden, einen Sensor sowie eine Auflage mit einer Auflagefläche umfasst.

Bei modernen Apothekenkommissioniervorrichtungen wird eine große Anzahl verschiedener und unterschiedlich dimensionierter Arzneimittelpackungen (Stückgüter) chaotisch und platzoptimiert auf lang gestreckten Regalböden gelagert. Diese bilden zusammen mit den Regalwänden eine Mehrzahl von Regalfächern, wobei pro Regalfach, d.h. pro Regalboden, eine große Anzahl von Arzneimittelpackungen gelagert wird.

Üblicherweise bestehen die Regalböden aus Glas und sind in den Regalwänden eingehängt. Aufgrund der Vielzahl der pro Regalboden eingelagerten Arzneimittelpackungen und der platzoptimierten Art der Lagerung kann das Gesamtgewicht der pro Regalboden gelagerten Arzneimittelpackungen stark schwanken. Die Regalböden sind derart ausgelegt, dass sich diese bei einer Belegung mit durchschnittlich schweren Arzneimittelpackungen nur minimal durchbiegen, wodurch eine Auslagerung mit Hilfe des Bediengerätes nicht gestört wird.

Zur Auslagerung der Arzneimittelpackungen wird das Bediengerät an eine bestimmte, einer Steuervorrichtung der Apothekenkommissioniervorrichtung bekannte Regalposition verfahren. Bei üblicher Belegung des Regalbodens fluchtet bei dieser Regalposition die Auflagefläche der Auflage des Bediengerätes horizontal in etwa mit der Oberfläche des Regalbodens, so dass die auszulagernde Arzneimittelpackung bzw. die auszulagernden Arzneimittelpackungen mit der Greifvorrichtung ohne Probleme von dem Regalboden auf die Auflage bewegt werden können. Üblicherweise umfasst die Greifvorrichtung bzw. der Greifer Klemmbacken, mit denen die Arzneimittelpackung(en) geklemmt und dann auf die Auflage bewegt wird bzw. werden. Die Greifvorrichtung kann ferner einen Vakuumsauger umfassen, mit welchem Arzneimittelpackungen auf die Auflage bewegt werden können. Der Vakuumsauger kann in Abhängigkeit von der Art der Arzneimittelpackung zusammen mit den Klemmbacken oder ohne diese eingesetzt werden.

Bekannt ist eine gattungsgemäße Apothekenkommissioniervorrichtung beispielsweise aus der DE 10 2005 063 197 A1. Die in dieser Druckschrift beschriebene Vorrichtung umfasst darüber hinaus eine Mehrzahl von Kassetten, die eine Vielzahl von Arzneimittelportionen aufnehmen können und eine integrierte Abgabeeinrichtung umfassen. Übertragen auf den Bereich der Hochregallager ist ein ähnlicher Aufbau aus der US 2008/0044262 A2 bekannt, wobei das in dieser Druckschrift beschriebene System ferner eine Mehrzahl von Markern umfasst, anhand welcher das System nach dem Aufbau die genauen Positionen von Regalpositionen erlernt, die, bedingt durch die Größe des Systems, nach dem Aufbau nicht genau bekannt sein können.

Wenn bei den bekannten Apothekenkommissioniervorrichtungen ein Regalboden mit einer übermäßig hohen Anzahl relativ schwerer Arzneimittelpackungen belegt ist, biegt sich der Regalboden materialbedingt so stark durch, dass die Oberfläche des Regalbodens dann, wenn das Bediengerät an die für den Regalboden vorgesehene Regalposition (Sollposition) verfahren ist, nicht mehr horizontal mit der Auflagefläche der Auflage fluchtet. Wird in einem solchen Fall eine Arzneimittelpackung von dem Regalboden auf die Auflage bewegt, so kann die Stirnseite bzw. Stirnfläche der Auflage im Extremfall einen Anschlag bilden, der eine Weiterbewegung der Arzneimittelpackung auf die Auflage verhindert, so dass die gewünschte Arzneimittelpackung nicht aus der Apothekenkommissioniervorrichtung ausgelagert werden kann.

Aufgabe der vorliegenden Erfindung ist es daher, ein Verfahren zum Auslagern von Arzneimittelpackungen aus einer Apothekenkommissioniervorrichtung bereitzustellen, bei welchem das Auslagern auch von mit besonders schweren Arzneimittelpackungen bestückten Regalböden möglich ist.

Diese Aufgabe wird erfindungsgemäß durch ein Verfahren mit den Merkmalen von Patentanspruch 1 gelöst.

Die Apothekenkommissioniervorrichtung, bei welcher das erfindungsgemäße Verfahren anwendbar ist, umfasst zumindest eine Regalreihe mit jeweils einer Mehrzahl von sich in einer horizontalen Richtung (X-Richtung, X-Achse) erstreckenden Regalböden und einer Mehrzahl von sich in einer vertikalen (Z-Richtung, Z-Achse) Richtung erstreckenden Regalwänden, wobei die Regalböden und die Regalwände eine Mehrzahl von Regalfächern bilden. Die Apothekenkommissioniervorrichtung umfasst ferner zumindest ein vor der Regalreihe horizontal und vertikal verfahrbares Bediengerät, wobei das Bediengerät selber eine Greifvorrichtung bzw. einen Greifer zum Ein- und/oder Auslagern von Arzneimittelpackungen auf die bzw. von den Regalböden, einen Sensor sowie eine Auflage mit einer Auflagefläche umfasst.

Die Greifvorrichtung kann einen Backengreifer mit längenverstellbaren Klemmbacken und/oder einen Sauggreifer (die eigentlichen Greifeinrichtungen) umfassen. Die Auflage kann beispielsweise als einfacher Auflagetisch, als Führungsschienen oder als Förderband ausgebildet sein. Der Sensor kann unterhalb der Auflage oder oberhalb der Auflage angeordnet sein, wobei die Anordnung des Sensors bestimmte Ausführungsformen des erfindungsgemäßen Verfahrens begünstigt.

Bei dem erfindungsgemäßen Verfahren wird das Bediengerät zunächst über eine Anordnung aus einer Horizontalführung und einer Vertikalführung zu einer vorgegebenen Regalposition verfahren, wobei sich die Greifvorrichtung dabei in einer Verfahrstellung befindet, bei welcher die eigentlichen Greifeinrichtungen (Klemmbacken, Sauggreifer) derart positioniert sind, dass eine freie Bewegung des Bediengerätes innerhalb der Apothekenkommissioniervorrichtung möglich ist. Unter "Normalbedingungen" ist die Regalposition so gewählt, dass die Oberfläche des Regalbodens, von welchem die Arzneimittelpackung ausgelagert werden soll, mit der Auflagefläche der Auflage des Bediengerätes horizontal fluchtet oder geringfügig höher (z.B. 1 mm) angeordnet ist. Im Rahmen dieser Anmeldung ist der Begriff "Arzneimittelpackung" als "zumindest eine Arzneimittelpackungen" auszulegen; die Auslagerung einer Mehrzahl (hintereinander) eingelagerter Arzneimittelpackungen soll auch umfasst sein.

Sobald die Regalposition angefahren ist, wird mit der Greifvorrichtung die Arzneimittelpackung auf dem der Regalposition zugehörigen Regalboden in Richtung auf die Auflage bewegt. Wie dies genau geschieht, ist im Fall des erfindungsgemäßen Verfahrens nicht wesentlich. Bei Verwendung eines Backengreifers wird die Arzneimittelpackung mit den Klemmbacken geklemmt und auf die Auflage gezogen. Die Bewegung auf die Auflage kann von dem Sauggreifer unterstützen oder auch allein von dem Sauggreifer durchführen werden.

Es wird geprüft, ob die Arzneimittelpackung vollständig auf Auflage bewegt ist. Diese Prüfung kann mit der Bewegung der Arzneimittelpackung auf die Auflage einhergehen, also gleichzeitig mit der Bewegung durchgeführt werden. Dies kann beispielsweise mit einem zusätzlichen Sensor der Greifvorrichtung geprüft werden.

Alternativ kann nach Beendigung eines Bewegungsablaufes, der unter "normalen" Umständen (d.h. ohne eine Störung der Bewegung von dem Regalboden auf die Auflage) für die Bewegung der Arzneimittelpackung auf die Auflage notwendig ist, geprüft werden, ob die zumindest eine Arzneimittelpackung vollständig auf die Auflage bewegt ist. Ist dies der Fall, kann die Arzneimittelpackung mit dem Bediengerät zur Ausgabestelle der Apothekenkommissioniervorrichtung transportiert.

Wenn die Prüfung jedoch negativ ausfällt, d. h. die Arzneimittelpackung nicht vollständig auf die Ablage bewegt ist, wird mit dem Sensor des Bediengerätes eine Kante (Oberkante oder Unterkante) des Regalbodens, auf welchem die Arzneimittelpackung gelagert ist, ermittelt und das Bediengerät zu einer entsprechenden korrigierten Regalposition verfahren (bei welcher problemlos ausgelagert werden kann), wobei die Greifvorrichtung vor dem Verfahren in die Verfahrstellung gebracht wurde. Dies kann beispielsweise bei der (versuchten) Bewegung der Arzneimittelpackung auf die Auflage geschehen sein. Sollten die Greifeinrichtungen der Greifvorrichtung bei dem Bewegen der Arzneimittelpackung in Richtung auf die Auflage nicht vollständig zurückgezogen worden sein, werden die Greifeinrichtungen vor dem Verfahren des Bediengeräts an die korrigierte Regalposition vollständig zurückgefahren (Verfahrstellung), so dass eine freie Bewegung des Bediengeräts möglich ist.

Bei dieser korrigierten Regalposition sind die Oberfläche des Regalbodens sowie die Auflagefläche der Auflage derart zueinander ausgerichtet, dass eine problemlose Bewegung von dem Regalboden auf die Auflage möglich ist, ohne dass die Stirnfläche der Auflage einen Anschlag für die Arzneimittelpackung bildet. Üblicherweise wird die Regalposition derart gewählt, dass die Oberfläche des Regalbodens horizontal mit der Auflagefläche der Auflage fluchtet oder die Auflagefläche der Auflage geringfügig unterhalb der Oberfläche des Regalbodens angeordnet ist.

Unter dem Begriff des Sensors ist im Rahmen dieser Anmeldung ein Abstandssensor mit einer Einrichtung zum Aussenden von Messstrahlen und zum Empfangen von Messstrahlen zu verstehen, wobei die beiden Einrichtungen in einer Einrichtung kombiniert sein können. Bei der Abstandsbestimmung kann der Sensor Richtung oder Laufzeit eines aktiv ausgesandten, an einer Oberfläche (einer Arzneimittelpackung oder eines Bauteils der Apothekenkommisioniervorrichtung) reflektierten Signales detektieren. Die Abstandsbestimmung kann aber auch kapazitiv oder anhand der Parallaxe bzw. eines Stereobildes einer elektronischen Kamera durchgeführt werden.

Bei Apothekenkommissioniervorrichtungen sind Laserabstandssensoren, die nach dem Prinzip der Lasertriangulation arbeiten, üblich. Dabei wird ein Laserstrahl auf eine Oberfläche (s.o.) gerichtet und mit der im Sensor befindlichen Empfangseinrichtung (beispielsweise Kamera, Photo-Diode, Dioden-Array) beobachtet. Ändert sich die Entfernung der Oberfläche vom Sensor, ändert sich auch der Winkel, unter dem der Lichtpunkt beobachtet wird und damit die Position des Abbildes auf dem Empfänger der Empfangseinrichtung. Wird beispielsweise ein Dioden-Array verwendet ändert sich mit dem Abstand die Diode, welche den reflektierten Lichtstrahl detektiert. Aus der Positionsänderung kann die Entfernung der Oberfläche vom Sensor berechnet werden.

Aus Kostengründen wird die Abstandsmessung regelmäßig als "Einzelpunktmessung" durchgeführt, d.h. der Messstrahl wird stets in einem konstanten Winkel ausgesendet und trifft, ohne Bewegung des Bediengeräts, stets auf dem gleichen Punkt auf (Einzelpunkt). Der reflektierte Strahl wird üblicherweise mit einem Dioden-Array detektiert.

Die Abstandsmessung kann dabei so durchgeführt werden, dass lediglich die Detektion bei einer bestimmten Diode (oder einem Dioden-Bündel) des Arrays von der Detektion außerhalb dieser Diode bzw. des Dioden-Bündels unterschieden wird. Die Abstandsmessung kennt dann lediglich zwei Zustände (nachfolgend "binäre Abstandsmessung").

Bei dem erfindungsgemäßen Verfahren wird sichergestellt, dass eine Auslagerung trotz eines durchgebogenen Regalbodens durchgeführt werden kann. Wird festgestellt, dass die Bewegung der Arzneimittelpackung auf die Auflage nicht durchgeführt werden kann, wird die Ist-Position bzw. der Istwert (bezogen auf die Z-Achse) einer Kante (Oberkante oder Unterkante) des Regalbodens mit dem Sensor ermittelt. Bei einer Durchbiegung des Regalbodens weicht diese Ist-Position von der Soll-Position ab; das Bediengerät (und damit die Auflage) ist somit für eine Auslagerung der Arzneimittelpackung effektiv zu hoch "positioniert". Das Bediengerät wird dann um einen der Abweichung entsprechenden Wert vertikal verfahren, so dass die Auslagerung problemlos möglich ist.

Wie bereits angedeutet kann der Sensor des Bediengeräts oberhalb oder unterhalb der Auflage angeordnet sein. Aufgrund dieser Anordnung innerhalb des Bediengeräts sind verschiedene alternative Ausführungsformen denkbar bzw. bevorzugt.

Ist der Sensor oberhalb der Auflage positioniert kann die Ermittlung der Oberkante des Regalbodens, auf welchem die Arzneimittelpackung gelagert ist und das Verfahren des Bediengerätes zu einer entsprechenden Regalposition derart durchgeführt werden, dass das Bediengerät zunächst horizontal verfahren wird, bis der Sensor einen Bereich neben der auszulagernden Arzneimittelpackung erfasst.

Bei Verwendung eines Laserabstandssensors beispielsweise erfasst der Sensor ständig den Abstand zu der nicht ausgelagerten Arzneimittelpackung. Endet diese, erhöht sich der Abstand sprunghaft; entweder erfasst der Sensor dann den Abstand zur Regalrückwand (dieser ist bekannt) oder zu einer weiter hinten liegenden Arzneimittelpackung. In dem Bereich neben der Arzneimittelpackung ist aufgrund der notwendigen Beabstandung der Arzneimittelpackungen voneinander (bezogen auf die X-Achse der Regalfächer bzw. der Regalböden) der Regalboden nicht belegt. Wird lediglich eine "binäre" Abstandsmessung durchgeführt ändert sich dann, wenn der Messstrahl über das Ende der nicht ausgelagerten Arzneimittelpackung geführt wird, der "Zustand" (0/1) bedingt durch die sprunghafte Änderung des Abstands und der dadurch bedingten Änderung der detektierenden Diode bzw. des detektierenden Dioden-Bündels.

Das Bediengerät wird an dieser Position dann nach unten verfahren, bis mit dem Sensor des Bediengerätes ein die Oberkante des Regalbodens charakterisierendes Signal ermittelt wird (bei Verwendung eines Laserabstandssensors wieder die sprunghafte Änderung des Abstandes zwischen Regalrückwand/hintere Arzneimittelpackung und Oberkante bzw. Stirnseite Regalboden; bei "binärer" Abstandsmessung wieder Zustandswechsel). Sobald das charakterisierende Signal ermittelt ist wird das Bediengerät zu einer entsprechenden Regalposition verfahren, bei welcher die Arzneimittelpackung ausgelagert werden kann.

Bei einer alternativen Ausführungsform des erfindungsgemäßen Verfahrens wird eine Unterkante des Regalbodens ermittelt und das Bediengerät zu einer entsprechenden Regalposition verfahren, indem das Bediengerät vertikal verfahren wird, bis mit dem Sensor ein die Unterkante des Regalbodens charakterisierendes Signal ermittelt wird. Das Bediengerät wird dann zu einer entsprechenden korrigierten Regalposition verfahren, bei welcher die Arzneimittelpackung ausgelagert wird. Wie das Bediengerät entlang der Z-Achse zu verfahren ist, ergibt sich aus der bekannten Dicke des Regalbodens und dem Aufbau des Bediengeräts (Anordnung Sensor zur Auflageoberfläche). In Abhängigkeit davon, ob der Sensor oberhalb oder unterhalb der Auflage im Bediengerät angeordnet ist, wird das Bediengerät entlang der Z-Achse nach oben (Sensor unterhalb Auflage) oder nach unten (Sensor oberhalb der Auflage) verfahren.

Bei einer weiteren alternativen Ausführungsform des erfindungsgemäßen Verfahrens, bei welchem der Sensors wieder unterhalb oder oberhalb der Auflage angeordnet sein kann, wird eine Kante (Oberkante/Unterkante) des Regalbodens ermittelt und das Bediengerät zu einer entsprechenden Regalposition verfahren, indem mit dem Sensor zunächst eine Ist-Position der Kante des Regalbodens ermittelt wird, die Ist-Position mit einer Soll-Position verglichen und das Bediengerät um einen der ermittelten Abweichung entsprechenden Wert vertikal verfahren wird.

Bei dieser Verfahrensführung wird also zunächst mit dem Sensor ermittelt, um welchen Wert der Regalboden nach unten versetzt ist, und das Bediengerät wird anschließend um einen entsprechenden Wert verfahren, so dass eine Auslagerung von dem durchgebogenen Regalboden problemlos möglich ist.

Im Gegensatz zu einer vorgenannten Variante des erfindungsgemäßen Verfahrens muss bei dieser Ausführungsform das Bediengerät nicht erst in horizontaler Richtung verfahren werden, um die Ist-Position der Oberkante des Regalbodens zu ermitteln. Dies hat den Vorteil, dass diese Verfahrensvariante rascher durchgeführt werden kann. Jedoch sind die an die Sensorik gestellten Anforderungen größer. Entweder wird eine 2- oder 3-dimensionale Abstandsmessung durchgeführt oder der Sensor für die Einzelpunktmessung ist um die Horizontalachse schwenk- bzw. drehbar, wobei als charakteristisches Signal die sprunghafte Abstandsänderung bzw. "Flanke" (Arzneimittelpackung/Regalrückwand; Regalrückwand/Glasboden) nicht verwendbar ist, sofern der Sensor nicht auch um die Vertikalachse schwenk- bzw. drehbar ist. Bei dieser Verfahrensvariante können ggf. andere charakteristische Signale ausgewertet werden; beispielsweise kann die Vorderkante des Regalbodens eine spezielle Beschichtung aufweisen, die durch einen entsprechenden Sensor erkannt wird. Einzelheiten hinsichtlich der Sensorik sind jedoch für die vorliegende Anmeldung nicht wesentlich; wichtig ist vielmehr, dass mit dem Sensor ein die Ist-Position der Oberkante des Regalbodens (und damit natürlich des Regalbodens selber) charakterisierendes Signal ermittelt wird.

Nach der Ermittlung der Kante des Regalbodens wird das Bediengerät zu einer entsprechenden korrigierten Regalposition verfahren. Die Regalposition wird derart gewählt, dass eine Bewegung der Arzneimittelpackung von dem Glasboden auf die Auflage möglich ist. Dazu ist die Auflagefläche der Auflage des Bediengerätes an der Oberfläche des Regalbodens, auf welchem die Arzneimittelpackung gelagert ist, auszurichten. Um die Auslagerung möglichst rasch und ohne Beschädigung durchzuführen, ist es bevorzugt, dass das Bediengerät derart verfahren wird, dass die Auflagefläche der Auflage mit einer Regalbodenfläche des Regalbodens, auf welchem die Arzneimittelpackung gelagert ist, horizontal fluchtet oder um einen Betrag Z tiefer angeordnet ist. Ein üblicher Wert für Z ist dabei 1 mm, wobei auch ein größerer Wert für Z verwendet werden kann, sofern die Beschaffenheit der Auflage dies ermöglicht.

Im Laufe des erfindungsgemäßen Verfahrens wird geprüft, ob die Arzneimittelpackung vollständig auf die Auflage bewegt ist. Eine solche Prüfung wird bei einer bevorzugten Ausführungsform derart durchgeführt, dass mit einem Sensor die Länge der auf die Auflage bewegten Arzneimittelpackung ermittelt und mit einem Soll-Wert verglichen wird, der in einer Steuereinrichtung der Apothekenkommissioniervorrichtung hinterlegt ist, wobei eine Abweichung von einem Soll-Wert anzeigt, dass die Arzneimittelpackung nicht vollständig auf die Auflage bewegt wurde. Die Länge der Arzneimittelpackung kann dabei beispielsweise so ermittelt werden, dass bei bekannter Bewegungsgeschwindigkeit der Arzneimittelpackung auf die Auflage die Unterbrechungsdauer beispielsweise einer Lichtschranke ermittelt wird. Alternativ kann bei der Auflage ein Berührungssensor angeordnet sein, der bei bekannter Bewegungsgeschwindigkeit der Arzneimittelpackung die Berührungsdauer misst oder ermittelt, ob nach beendeter Bewegung der Arzneimittelpackung auf die Auflage der Berührungssensor wieder freigegeben ist. Im letztgenannten Fall würde dies bedeuten, dass der Bewegungssensor in der Nähe der Vorderkante der Auflage angeordnet ist. Die beiden oben genannten Ausführungsformen ermöglichen eine zuverlässige und kostengünstige Prüfung.

Die Greifeinrichtungen der Greifvorrichtungen umfassen einen Antrieb, der für die Bewegung der Greifeinrichtungen in bzw. aus dem Regalfach zuständig ist. Der Antrieb umfasst Positionierungsregler, die ständig ihre Ist-Position melden. Bei vorgegebener Ist-Position des Antriebs bzw. der Positionierungsregler kann alternativ mit dem Sensor geprüft werden, ob die Arzneimittelpackung auf die Auflage bewegt wurde.

Bei einer Ausführungsform des erfindungsgemäßen Verfahrens wird das Bediengerät, nachdem es horizontal in den Bereich neben einer Arzneimittelpackung gefahren wurde, solange nach unten verfahren, bis mit dem Sensor ein die Oberkante des Regalbodens charakterisierendes Signal ermittelt wird. Anschließend wird das Bediengerät dann zu einer Regalposition vor der Arzneimittelpackung verfahren und die Arzneimittelpackung wird ausgelagert. Diese Ausführungsform des erfindungsgemäßen Verfahrens kann dahingehend erweitert werden, dass nach dem Ermitteln eines für die Oberkante des Regalbodens charakteristischen Signals das Bediengerät weiter nach unten verfahren wird, ein für die Unterkante charakteristisches Signal ermittelt, anhand der ermittelten Signale eine Plausibilitätsprüfung durchgeführt wird und, sofern die Plausibilitätsprüfung positiv ist, das Bediengerät dann zu der Regalposition verfahren wird, an welcher die Arzneimittelpackung ausgelagert werden kann.

Bei der Plausibilitätsprüfung wird überprüft, ob die anhand der charakteristischen Signale für die Oberkante und die Unterkante des Regalbodens ermittelte Dicke des Regalbodens mit einem Soll-Wert übereinstimmt. Ist dies nicht der Fall, wurde bei der vorgeschalteten Horizontalbewegung des Bediengerätes dieses nicht an eine Stelle verfahren, bei welcher keine Arzneimittelpackung mehr an der Oberkante des Regalbodens angeordnet ist. Die vorgenannte Ausführungsform des erfindungsgemäßen Verfahrens erhöht die Sicherheit bei der Auslagerung von Arzneimittelpackungen.

Bei einer weiteren bevorzugten Ausführungsform kann das Bediengerät, nachdem festgestellt wurde, dass die Arzneimittelpackung nicht vollständig auf die Auflage bewegt wurde, weiter nach oben bewegt werden, bis mit dem Sensor die Oberkante der auszulagernden Arzneimittelpackung ermittelt wird. Anhand der bekannten Packungshöhe lässt sie Durchbiegung des Regalbodens ermitteln. Sobald die Oberkante der Arzneimittelpackung ermittelt wurde wird das Bediengerät zur Auslagerung der Arzneimittelpackung wieder nach unten verfahren.

Bei einer bevorzugten Ausführungsform des erfindungsgemäßen Verfahrens, bei welchem der Sensor unterhalb der Auflage angeordnet ist, wird, sofern die Prüfung dahingehend, ob die Arzneimittelpackung vollständig auf die Auflage bewegt ist, negativ ausfällt, die Arzneimittelpackung mit der Greifvorrichtung derart von der Auflage weg bewegt wird, dass die zumindest eine Arzneimittelpackung keinen Kontakt zu der Stirnfläche der Auflage hat. Sofern die Greifvorrichtung einen Vakuumsauger umfasst, kann die Arzneimittelpackung von der Oberkante weg in das Regalfach hinein verschoben werden. Alternativ kann die Arzneimittelpackung mit den Klemmbacken der Greifvorrichtung in das Regalfach geschoben werden. Bei einer weiteren Ausführungsform kann das Bediengerät einen Schieber umfassen, mit welchem die Arzneimittelpackungen zurückgeschoben werden können. Ist die Arzneimittelpackung zurück geschoben, kann das Bediengerät nach oben verfahren werden, ohne dass die Lage der Arzneimittelpackung von der Auflage verändert wird.

Bei einer weiteren bevorzugten Ausführungsform des erfindungsgemäßen Verfahrens wird die Arzneimittelpackung mit der Greifvorrichtung derart von der Auflage weg bewegt, dass die Oberkante des Regalbodens freigegeben ist, bevor die Greifvorrichtung in die Verfahrstellung gebracht wird. Ist die Arzneimittelpackung verschoben, wird das Bediengerät nach unten verfahren, bis mit dem Sensor ein die Oberkante des Regalbodens charakterisierendes Signal ermittelt wird. Abschließend wird das Bediengerät (sofern überhaupt notwendig) zu einer Regalposition verfahren, bei welcher die Arzneimittelpackung ausgelagert wird.

Alternativ kann die Aufgabe erfindungsgemäß mit einem Verfahren gemäß Anspruch 11 gelöst werden. Die Apothekenkommissioniervorrichtung, bei welcher das alternative erfindungsgemäße Verfahren anwendbar ist, umfasst zumindest eine Regalreihe mit jeweils einer Mehrzahl von sich in einer horizontalen Richtung erstreckenden Regalböden und einer Mehrzahl von sich in einer vertikalen Richtung ersteckenden Regalwänden und zumindest ein vor der Regalreihe horizontal und vertikal verfahrbares Bediengerät, wobei das Bediengerät eine Greifvorrichtung zum Einund/oder Auslagern von Arzneimittelpackungen auf die bzw. von den Regalböden, einen Sensor sowie eine Auflage mit einer Auflagefläche umfasst, wobei der Sensor unterhalb der Auflage in dem Bediengerät angeordnet ist.

Bei dem alternativen Verfahren wird das Bediengerätes in einer Verfahrstellung zu einer vorgegebenen Regalposition verfahren, bei welcher die zumindest eine Arzneimittelpackung ausgelagert werden soll. Sofern der der Regalposition entsprechende Regalboden "normal" belegt ist und keine Durchbiegung aufgrund einer Belegung mit zahlreichen schweren Arzneimittelpackungen vorliegt, kann die zumindest eine Arzneimittelpackung bei dieser Regalposition ausgelagert werden.

Sobald die Regalposition erreicht ist, wird mit dem Sensor der Abstand A_{I} von dem Sensor zu der Unterseite des Regalbodens ermittelt, der Abstand A_{I} mit einem Sollwert A_{S} für den Abstand zwischen dem Sensor und der Unterseite des Regalbodens verglichen, und, falls eine einen Grenzwert überschreitende Abweichung zwischen dem ermittelten Abstand A_{I} und dem Sollwert A_{S} vorliegt, wird das Bediengerät um einen entsprechenden Betrag vertikal zu einer korrigierten Regalposition verfahren und wird mit der Greifvorrichtung die zumindest eine Arzneimittelpackung auf dem der Regalposition zugehörigen Regalboden in Richtung Auflage bewegt.

Um Unterscheid zu dem oben genannten Verfahren wird bei der Alternativlösung zunächst geprüft, ob die Ausrichtung des Bediengeräts zu dem Regalboden, von welchem ausgelagert werden soll, korrekt ist. Dazu wird der Abstand Sensor / Unterseite Regalboden gemessen und mit einem Sollwert verglichen. Liegt keine Abweichung vor sind die Auflagefläche und die Oberfläche des Regalbodens derart horizontal ausgerichtet, dass eine Bewegung der Arzneimittelpackung problemlos durchgeführt werden kann. Liegt eine Abweichung vor wird anhand dieser Abweichung (und der Kenntnis über den genauen Aufbau der Regalreihe und des Bediengeräts ermittelt, wie weit das Bediengerät vertikal (in der Regal nach unten) verfahren werden muss, um eine für die Auslagerung geeignete korrigierte Regalposition zu erreichen.

Im Nachfolgenden werden die erfindungsgemäßen Verfahren anhand von in der Zeichnung veranschaulichten bevorzugten Ausführungsformen näher beschrieben, wobei lediglich ein Abschnitt einer Apothekenkommissioniervorrichtung mit Bediengerät schematisch wiedergegeben ist. In der Zeichnung zeigen:
Figuren 1a - 1f eine Ausführungsform eines erfindungsgemäßen Verfahrens,
Figuren 2a - 2f eine weitere Ausführungsform eines erfindungsgemäßen Verfahrens
Figuren 3a - 3c eine weitere Ausführungsform eines erfindungsgemäßen Verfahrens
Figur 4 eine weitere Ausführungsform eines erfindungsgemäßen Verfahrens, und
die Figuren 5a und 5b eine Ausführungsform eines alternativen erfindungsgemäßen Verfahrens.

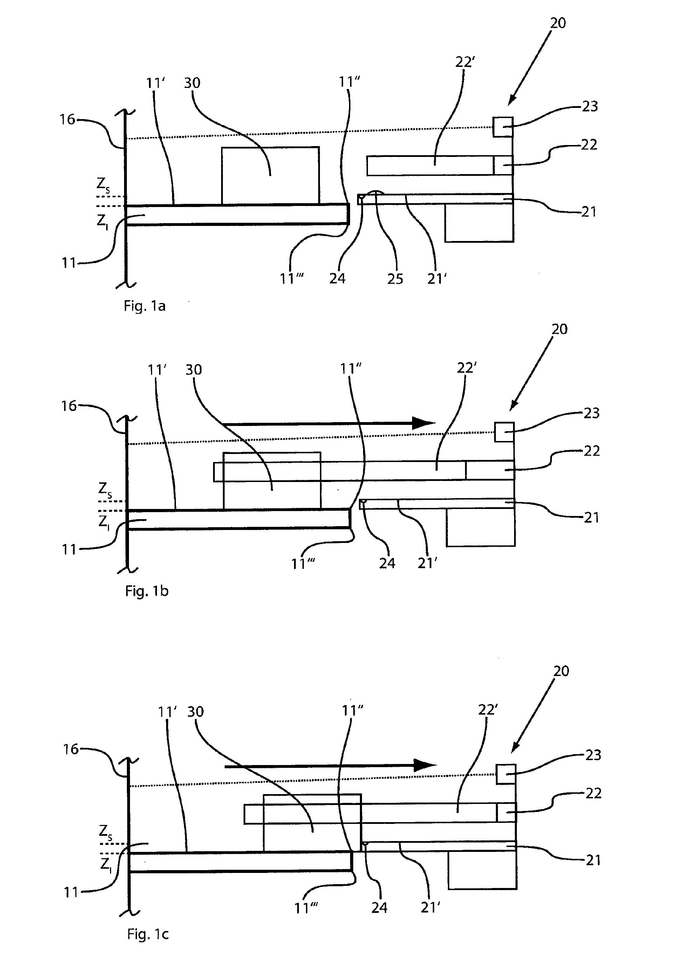

Die Figuren 1a - 1f veranschaulichen eine Ausführungsform eines erfindungsgemäßen Verfahrens, wobei die baulichen Merkmale der Apothekenkommissioniervorrichtung lediglich schematisch dargestellt sind. Die hier gezeigte Ausführungsform eignet sich für Bediengeräte, bei denen der Sensor 23 oberhalb der Auflage 21 verbaut ist.

Bei dem erfindungsgemäßen Verfahren wird das Bediengerät 20 zunächst in einer Verfahrstellung, bei welcher Greifeinrichtungen 22' (hier Klemmbacken) der Greifvorrichtung 22 derart angeordnet sind, dass ein freies Bewegen des Bediengerätes 20 in der Apothekenkommissioniervorrichtung möglich ist, zu einer vorgegebenen Regalposition verfahren. Die vorgegebene Regalposition ist in den Figuren 1a - 1d wiedergegeben. Die vorgegebene Regalposition stellt eine Position dar, in welcher Arzneimittelpackungen bei einer "normalen" Belegung eines Regalbodens ohne Probleme ausgelagert werden können; diese Regalposition ist in einer (nicht gezeigten) Steuereinheit der Apothekenkommissioniervorrichtung hinterlegt.

Der in den Figuren 1a - 1f gezeigte Regalboden 11 ist aufgrund einer Beladung mit einer hohen Anzahl von schweren Arzneimittelpackungen nach unten durchgebogen, so dass die Oberfläche 11' des Regalbodens 11 nicht horizontal mit der Auflagefläche 21' der Auflage 21 des Bediengerätes 20 fluchtet. Da die Arzneimittelpackungen jedoch lediglich platzoptimiert auf den Regalböden abgelegt werden, liegen der Steuereinrichtung keine Informationen über eine (mögliche) Durchbiegung des Regalbodens 11 vor. Nach der Positionierung des Bediengerätes 20 werden (bei Annahme, dass eine normale Auslagerung möglich ist) Greifeinrichtungen 22' der Greifvorrichtung 22 hin zu der Regalrückwand 16 in das Regalfach geschoben und die Arzneimittelpackung 30 gegriffen (Figur 1b).

Bei der gezeigten Ausführungsform kommt ein Klemmgreifer zum Einsatz, so dass die Arzneimittelpackung 30 mit den Greifeinrichtungen 22' geklemmt und anschließend auf dem Regalboden 11 hin zu der Auflage 21 des Bediengerätes bewegt wird. Aufgrund der Durchbiegung des Regalbodens 11 bildet die Stirnseite bzw. Stirnfläche der Auflage 21 einen Anschlag für die Arzneimittelpackung 30, wie dies in Figur 1c zu erkennen ist. Der von der Stirnseite bzw. -fläche der Auflage 21 gebildete Anschlag verhindert, dass die Arzneimittelpackung 30 mit der Greifvorrichtung auf die Auflage 21 bewegt werden kann. Dies wird mit einem Sensor 24, 25 geprüft. Bei dem Sensor 24 handelt es sich um einen optischen Sensor, der prüft, ob die Arzneimittelpackung 30 vollständig an ihm vorbeibewegt wurde. Dies lässt sich beispielsweise anhand der (bekannten) Größe der Arzneimittelpackung 30 und der bekannten Bewegungsgeschwindigkeit (unter Normalbedingungen) ermitteln. Alternativ kann ein Berührungssensor 25 ermitteln, ob die Arzneimittelpackung vollständig über diesen bewegt wurde; ist dies der Fall, ist der Sensor nach vollständiger Vorbeibewegung der Arzneimittelpackung 30 wieder berührungslos.

Aufgrund der Durchbiegung des Regalbodens 11 fällt die Prüfung jedoch negativ aus, so dass mit dem Sensor 23 eine Kante 11 ", 11"' des Regalbodens 11, auf welchem die Arzneimittelpackung 30 gelagert ist, ermittelt werden muss.

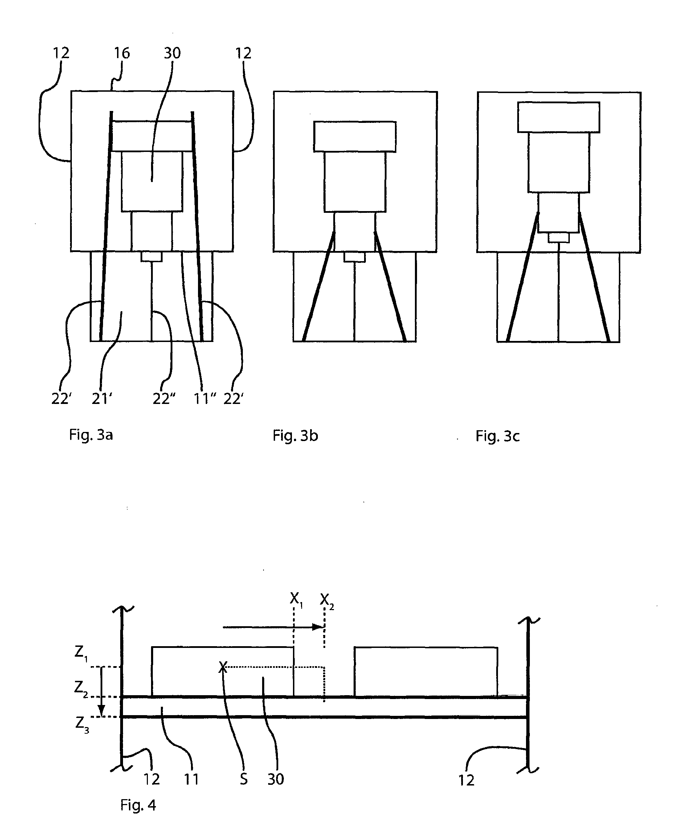

Dazu wird bei dem gezeigten Ausführungsbeispiel zunächst die Arzneimittelpackung 30 wieder mit der Greifvorrichtung 22 so weit in das Regalfach geschoben, dass die Oberkante 11" des Regalbodens frei (und damit detektierbar) ist. Wie dies im Einzelnen durchgeführt werden kann, ist in Bezug auf Figuren 3a - 3c beschrieben. Bei einer alternativen Ausführungsform kann das Rückschieben der Arzneimittelpackung 30 unterbleiben; da dann die Oberkante 11" nicht wie üblich detektierbar ist, muss das Bediengerät 20 so weit nach unten verfahren werden, dass die Unterkante 11"' des Regalbodens 11 anhand des charakteristischen Signals ermittelt werden kann.

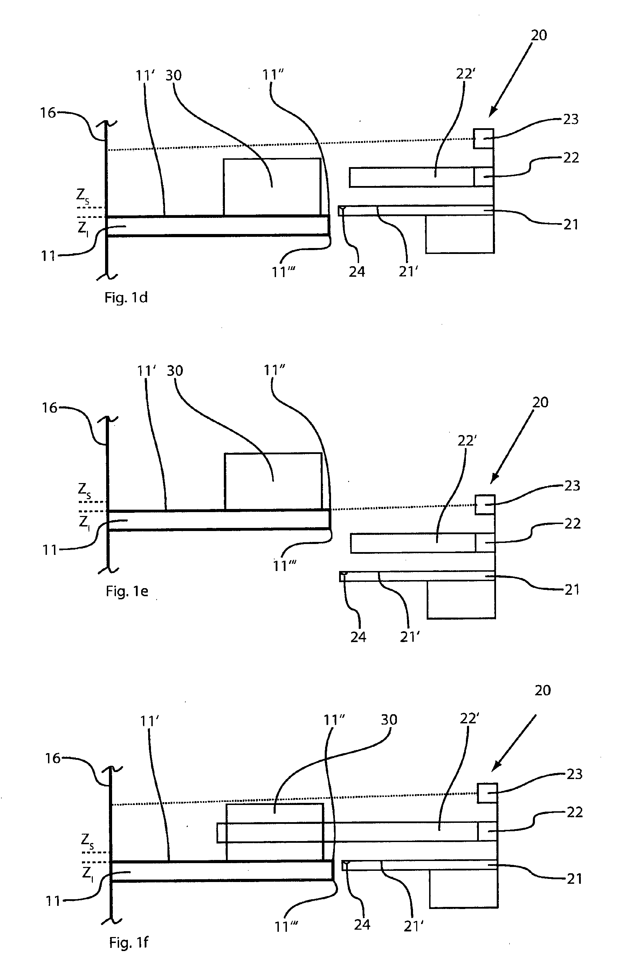

Nachdem die Arzneimittelpackung in das Regalfach geschoben wurde, wird das Bediengerät so weit nach unten (entlang der Z-Achse) verfahren, bis das die Oberkante 11" charakterisierende Signal ermittelt wird (Figur 1e), mit welchem der Ist-Wert (bezogen auf die Z-Achse) der Oberkante 11" bestimmt werden kann.

Sobald die Kante 11", 11"' ermittelt ist, wird das Bediengerät 20 zu einer entsprechenden korrigierten Regalposition verfahren (Figur 1f) und die Arzneimittelpackung ausgelagert (siehe oben). Die korrigierte Regalposition wird anhand spezieller baulicher Gegebenheiten ermittelt (z.B. Regalbodendicke, Ist-Wert für die Kante, Aufbau Bediengerät).

Sofern ein Rückschieben der Arzneimittelpackung nicht durchgeführt werden soll, kann eine Ermittlung der Oberkante 11" wie in Figur 4 dargestellt durchgeführt werden. Der Punkt S zeigt den Auftreffpunkt des Messstrahles des Sensors 23 auf der Arzneimittelpackung 30 gemäß der in Figur 1c gezeigten Stellung der Arzneimittelpackung 30, d. h. anliegend an der Stirnseite bzw. -fläche der Auflage 21. Das Bediengerät 20 wird mit dem Sensor 23 horizontal (X-Achse bzw. X-Richtung) verfahren, wobei der Messstrahl des Sensors 23 über die Arzneimittelpackung 30 entlang der punktierten Linie läuft. Sobald durch die Bewegung des Bediengerätes 20 der Messstrahl über den Rand der Arzneimittelpackung geführt wird (bei X-Position X₁), wird sprunghaft ein größerer Abstandes ermittelt (Zustandsänderung bei binärer Abstandsmessung), da der Sensor nach Überschreiten der X₁-Position den Abstand zu der Regalwand 16 oder einer hinter der an der Stirnfläche der Auflage 21 anliegenden Arzneimittelpackung 30 misst. Der Sensor 23 hat nun einen Bereich neben der Arzneimittelpackung 30 erfasst und das Bediengerät 20 wird dann nach unten verfahren, wobei der Laufweg des Messstrahles des Sensors 23 wiederum mit einer punktierten Linie gekennzeichnet ist. Sobald der Messpunkt, ausgehend von der Z-Position Z₁, die Z-Position Z₂ reicht, findet wiederum eine sprunghafte Änderung des gemessenen Abstandes statt, nämlich dann, wenn der Messstrahl auf die Oberkante 11" des Regalbodens 11 trifft. Dies wird als das die Oberkante 11" des Regalbodens 11 charakterisierende Signal ermittelt. Sobald das charakterisierende Signal ermittelt wurde, ist die Ist-Position der Oberkante 11" des Regalbodens 11 bekannt und basierend auf dieser Ist-Position wird das Bediengerät 20 zu einer Regalposition verfahren, bei welcher die Arzneimittelpackung ausgelagert werden kann, wobei die "Rückführung" in horizontaler Richtung abhängig davon ist, wie weit das Bediengerät zum Erfassen des Bereiches neben der Arzneimittelpackung verfahren werden musste.

Sobald das Bediengerät in die entsprechende Regalposition gebracht ist, wie dies in Figur 1d gezeigt ist, wird die Arzneimittelpackung 30 von den Greifeinrichtungen 22' der Greifvorrichtung 22 auf die Auflage 21 des Bediengeräts 20 bewegt, wobei mit dem Sensor auch diese Bewegung der Arzneimittelpackung 30 überwacht werden kann. Sobald die Arzneimittelpackung auf die Auflage 21 bewegt wurde, wird diese mit dem Bediengerät 20 zu einem Ablageort in der Apothekenkommissioniervorrichtung gebracht.

In Figur 4 ist noch eine weitere Ausführungsform angedeutet, bei welcher das Bediengerät nach dem Ermitteln der Oberkante 11" bei der Z₂-Position weiter nach unten verfahren wird, um die Unterkante 11"' des Regalbodens 11 bei der Z₃-Position zu ermitteln. Aus den ermittelten Werten für die Z₂- und die Z₃-Position kann die Dicke des Regalbodens ermittelt werden und dieser Wert für eine Plausibilitätsprüfung verwendet werden (nur wenn der Wert für die Dicke des Regalbodens mit einem Sollwert übereinstimmt wird die Arzneimittelpackung ausgelagert).

Wie Figur u.a. 1c zu entnehmen ist, liegt die Arzneimittelpackung 30 bei einem Verfahrensschritt an der Stirnseite bzw. - fläche der Auflage 21 an. Bei der oberhalb beschriebenen Ausführungsform des erfindungsgemäßen Verfahrens wird das Bediengerät ausgehend von diesem Verfahrensschritt zunächst horizontal und dann vertikal verfahren. Aufgrund der Anlage der Arzneimittelpackung 30 an der Stirnseite der Auflage 21 kann die Horizontalbewegung des Bediengerätes gestört sein, oder die Horizontalbewegung kann die Arzneimittelpackung auf den Regalboden verschieben, was eine spätere Auslagerung erschwert oder unmöglich macht.

Um dies zu vermeiden kann bei einer Ausführungsform des erfindungsgemäßen Verfahrens die Arzneimittelpackung 30, nachdem festgestellt wurde, dass die Arzneimittelpackung 30 nicht vollständig auf die Ablage 21 bewegt ist, mit der Greifvorrichtung 22 in das Regalfach zurückgeschoben werden. Dies ist in den Figuren 3a - 3c gezeigt, wobei die in Figur 3a gezeigte Ausgangssituation in etwa Figur 1c entspricht, d. h. die Arzneimittelpackung 30 liegt an der Stirnseite der Auflage 21 an (Bezugszeichen wurden der Übersicht halber bei den Figuren 3b und 3c fortgelassen).

Bei dem in den Figuren 3a - 3c gezeigten Ausführungsbeispiel sollen drei Arzneimittelpackungen ausgelagert werden. Das Zurückbewegen der Arzneimittelpackungen 30 kann mit den Greifeinrichtungen 22' (Klemmbacken) oder der Greifeinrichtung 22" (Sauggreifer oder Schieber) durchgeführt werden. Im erstgenannten Fall muss mit den Greifeinrichtungen 22' die Arzneimittelpackung gegriffen wird, die an der Stirnfläche der Auflage 21 anliegt. Über diese werden dann sämtliche Arzneimittelpackungen in die Regalreihe zurückgeschoben. Bei Verwendung der Greifeinrichtung 22" (Sauggreifer) ist es unwesentlich, wie viele Arzneimittelpackungen in die Regalfläche zurückgeschoben werden sollen.

Nachdem die Arzneimittelpackungen in die Regalfläche zurückgeschoben wurden, ist es nicht mehr notwendig, das Bediengerät 20 zur Ermittlung der Oberkante 11" des Regalbodens 11 horizontal zu verfahren, da nun wieder ein Abstandssprung Arzneimittelpackung/Oberkante Regalboden erzeugt wurde. Zur Ermittlung der Oberkante des Regalbodens genügt es, das Bediengerät nach unten zu verfahren, bis das die Oberkante charakterisierende Signal ermittelt wird, und das Bediengerät ggf. für die Auslagerung zu justierten, wobei diese anschließende Justierung (wie bei sämtlichen anderen Ausführungsformen auch) von der genauen baulichen Ausgestaltung des Bediengerätes 20 abhängig ist. Wenn beispielsweise bei der Ermittlung des für die Oberkante charakteristischen Signals die Oberfläche des Regalbodens noch tiefer immer tiefer als die Auflage angeordnet ist muss nachjustiert werden.

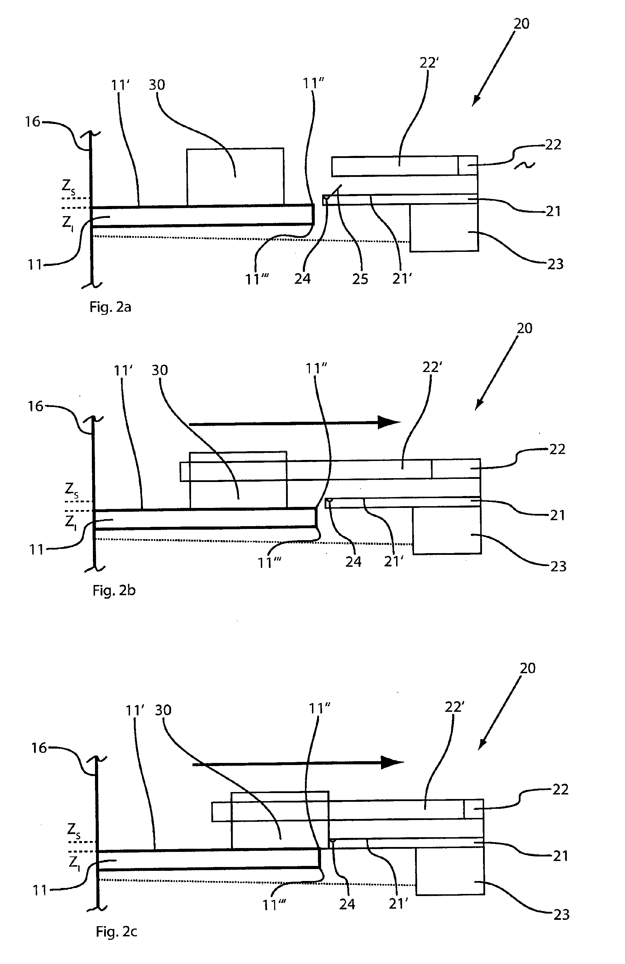

Die Figuren 2a - 2f veranschaulichen eine weitere Ausführungsform eines erfindungsgemäßen Verfahrens, wobei die baulichen Merkmale der Apothekenkommissioniervorrichtung lediglich schematisch dargestellt sind. Die hier gezeigte Ausführungsform eignet sich für Bediengeräte, bei denen der Sensor 23 unterhalb der Auflage 21 verbaut ist. Die gezeigte Ausführungsform unterscheidet sich nur geringfügig von der in den Figuren 1a - 1f gezeigten, so dass zur Vermeidung von unnötigen Wiederholungen auf eine detaillierte Beschreibung verzichtet wird.

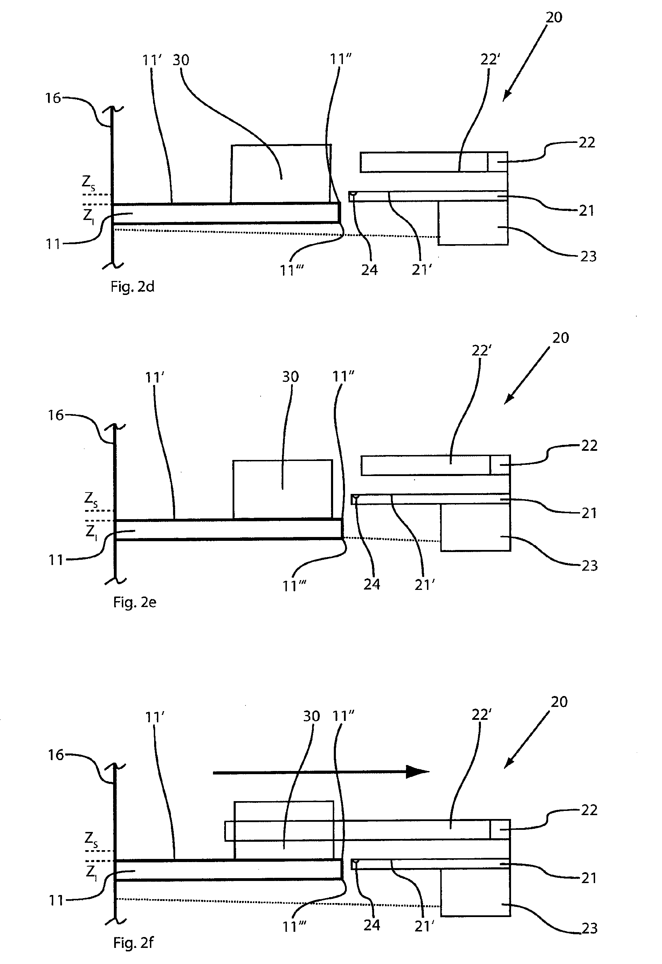

Das Bediengerät 20 wird zunächst in einer Verfahrstellung zu einer vorgegebenen Regalposition verfahren (Figur 2a), bei welcher ausgelagert werden soll. Zur Auslagerung werden die Arzneimittelpackung 30 mit der Greifvorrichtung 22 auf dem Regalboden 11 hin zur Auflage 21 des Bediengerätes bewegt (Figur 2b). Dann wird geprüft, ob die Arzneimittelpackung 30 auf die Auflage bewegt wurde (Details siehe Beschreibung zu Figuren 1a - 1f) und sofern dies nicht der Fall ist, wird die Arzneimittelpackung 30 mit der Greifvorrichtung 22 in das Regalfach zurückgeschoben (Figur 2d), um so bei einer nachfolgenden Bewegung des Bediengeräts nach oben zu vermeiden, dass die Arzneimittelpackung verschoben wird. Mit eingeschaltetem Sensor 23 (Messstrahl ist als punktierte Linie dargestellt) wird das Bediengerät dann "nach oben" (bezogen auf die Z-Achse) bewegt, bis mit dem Sensor 23 ein die Unterkante 11"' charakterisierendes Signal (näheres siehe oben) ermittelt wird (Figur 2e). Sobald das Signal ermittelt ist wird das Bediengerät um einen bestimmten Wert nach unten in eine entsprechende korrigierte Regalposition (Figur 2f) verfahren, wobei der Wert von den baulichen Einzelheiten des Bediengeräts 20 sowie der Dicke des Regalbodens abhängig ist.

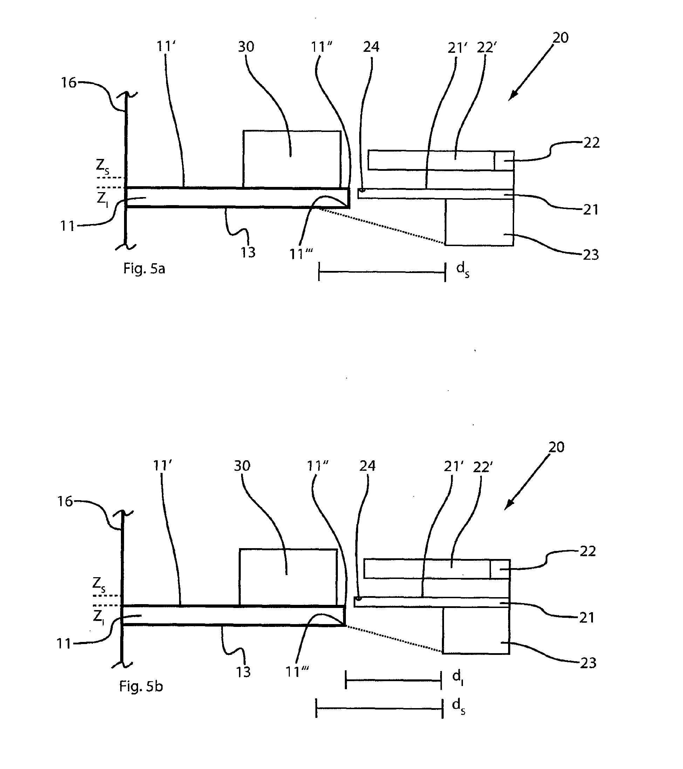

Figuren 5a und 5b zeigen eine Ausführungsform eines alternativen Verfahrens zum Auslagern von Arzneimittelpackungen aus einer Apothekenkommisioniervorrichtung. Die Apothekenkommisioniervorrichtung umfasst eine Regalreihe mit jeweils einer Mehrzahl von sich in einer horizontalen Richtung erstreckenden Regalböden 11 und einer Mehrzahl von sich in einer vertikalen Richtung ersteckenden Regalwänden, wobei die Regalböden und die Regalwände eine Mehrzahl von Regalfächern bilden. Vor der Regalreihe ist ein horizontal und vertikal verfahrbares Bediengerät 20 angeordnet, welches eine Greifvorrichtung 22, einen Sensor 23 sowie eine Auflage 21 mit einer Auflagefläche 21' umfasst, wobei der Sensor 23 unter der Auflage 21 abgeordnet ist.

Das Bediengerätes 20 wird zunächst in einer Verfahrstellung zu einer vorgegebenen Regalposition verfahren wird, bei welcher die zumindest eine Arzneimittelpackung ausgelagert werden soll. Bevor, im Gegensatz zu dem alternativen Verfahren, die Arzneimittelpackung ausgelagert wird, wird in jedem Fall mit dem Sensor 23 der Abstand A_{I} zwischen dem Sensor 23 und der Unterseite 13 des Regalbodens 11 ermittelt (der Messstrahl ist wieder als punktierte Linie dargestellt). Der "Abstand" zwischen dem Sensor und der Unterseite 13 des Regalbodens ist bezogen auf den Auftreffpunkt des Messstrahls auf der Unterseite 13 des Regalbodens, welcher sich bei Verschiebung des Bediengerätes (und damit des Sensors) gegenüber dem Regalboden ändert. Bei den Figuren 5a und 5b ist dies mit auf die X-Achse projizierten Abständen d_{I} und d_{D} veranschaulicht, wobei diese Werte nicht den eigentlichen Abstand wiedergeben.

Der Abstand A_{I} mit einem Sollwert für den Abstand zwischen dem Sensor 23 und der Unterseite 13 des Regalbodens 11 verglichen. Anhand der Abweichung von dem Sollwert kann bestimmt werden, inwiefern die horizontale Fluchtung zwischen dem Regalboden und der Auflagefläche 21' gestört ist. Wird keine einen Grenzwert übersteigende Abweichung festgestellt, kann die Arzneimittelpackung 30 mit der Greifvorrichtung 22 ausgelagert werden (Figur 5a).

Wird jedoch eine Abweichung festgestellt, die ggf. eine Auslagerung aufgrund der Durchbiegung des Regalbodens verhindert (Figur 5b), wird das Bediengerät 20 um einen entsprechenden Betrag nach unten zu einer korrigierten Regalposition verfahren und mit der Greifvorrichtung 22 die zumindest eine Arzneimittelpackung 30 auf dem Regalboden 11 in Richtung Auflage 21 bewegt.

## Patentansprüche

1. Verfahren zum Auslagern von Arzneimittelpackungen (30) aus einer Apothekenkommissioniervorrichtung mit
zumindest einer Regalreihe mit jeweils einer Mehrzahl von sich in einer horizontalen Richtung erstreckenden Regalböden (11) und einer Mehrzahl von sich in einer vertikalen Richtung ersteckenden Regalwänden (12),
zumindest einem vor der Regalreihe horizontal und vertikal verfahrbaren Bediengerät (20), wobei das Bediengerät (20) eine Greifvorrichtung (22) zum Ein- und/oder Auslagern von Arzneimittelpackungen (30) auf die bzw. von den Regalböden (11), einen Sensor (23) sowie eine Auflage (21) mit einer Auflagefläche (21') umfasst,
wobei das Bediengerät (20) in einer Verfahrstellung zu einer vorgegebenen Regalposition verfahren wird, wobei mit der Greifvorrichtung (22) die zumindest eine Arzneimittelpackung (30) auf dem der Regalposition zugehörigen Regalboden (11) in Richtung Auflage (21) bewegt wird, **dadurch gekennzeichnet, daß** geprüft wird, ob die zumindest eine Arzneimittelpackung (30) vollständig auf die Auflage (21) bewegt ist, und, sofern die Prüfung negativ ausfällt,
mit dem Sensor (23) eine Kante (11", 11"') des Regalbodens (11), auf welchem die zumindest eine Arzneimittelpackung gelagert ist, ermittelt und das Bediengerät (20) zu einer entsprechenden Regalposition verfahren wird, wobei die Greifvorrichtung (22) vor dem Verfahren in der Verfahrstellung gebracht wurde.

2. Verfahren zum Auslagern von Arzneimittelpackungen nach Anspruch 1, wobei eine Oberkante (11") des Regalbodens (11) ermittelt und das Bediengerät (20) zu einer entsprechenden Regalposition verfahren wird, indem das Bediengerät (20) zunächst horizontal verfahren wird, bis der Sensor (23) einen Bereich neben der zumindest einen auszulagernden Arzneimittelpackung (30) erfasst, das Bediengerät (20) dann nach unten verfahren wird, bis mit dem Sensor (23) ein die Oberkante (11") des Regalbodens (11) charakterisierendes Signal ermittelt wird und das Bediengerät dann zu einer entsprechenden Regalposition verfahren wird, bei welcher die Arzneimittelpackung ausgelagert wird.

3. Verfahren zum Auslagern von Arzneimittelpackungen nach Anspruch 1, wobei eine Unterkante (11"') des Regalbodens (11) ermittelt und das Bediengerät (20) zu einer entsprechenden Regalposition verfahren wird, indem das Bediengerät vertikal verfahren wird, bis mit dem Sensor (23) ein die Unterkante (11"') des Regalbodens (11) charakterisierendes Signal ermittelt wird und das Bediengerät dann zu einer entsprechenden Regalposition verfahren wird, bei welcher die Arzneimittelpackung ausgelagert wird.

4. Verfahren zum Auslagern von Arzneimittelpackungen nach Anspruch 1, wobei eine Kante (11", 11"') des Regalbodens (11) ermittelt und das Bediengerät zu einer entsprechenden Regalposition verfahren wird, indem mit dem Sensor (23) zunächst ein Istwert einer Kante (11", 11"') des Regalbodens (11) ermittelt wird, der Istwert mit einem Sollwert verglichen und das Bediengerät (20) um einen der ermittelten Abweichung entsprechenden Wert vertikal verfahren wird.

5. Verfahren zum Auslagern von Arzneimittelpackungen nach einem der Ansprüche 1 - 4, wobei das Bediengerät derart verfahren wird, dass die Auflagefläche (21') mit einer Regalbodenfläche (11') des Regalbodens (11), auf welchem die zumindest eine auszulagernde Arzneimittelpackung gelagert ist, horizontal fluchtet oder um einen Betrag (Z) tiefer angeordnet ist.

6. Verfahren zum Auslagern von Arzneimittelpackungen nach einem der Ansprüche 1 - 5, wobei geprüft wird, ob die zumindest eine Arzneimittelpackung (30) vollständig auf die Auflage (21) bewegt wurde, indem mit einem Sensor (24) die Länge der zumindest einen auf die Auflage bewegten Arzneimittelpackung (30) ermittelt und mit einem Sollwert vergleichen wird, wobei eine Abweichung von einem Sollwert anzeigt, dass die zumindest eine Arzneimittelpackung (30) nicht vollständig auf die Auflage (21) bewegt wurde.

7. Verfahren zum Auslagern von Arzneimittelpackungen nach einem der Ansprüche 1 - 5, wobei geprüft wird, ob die zumindest eine Arzneimittelpackung (30) vollständig auf die Auflage (21) bewegt wurde, indem mit einem Sensor (25) geprüft wird, ob die zumindest eine Arzneimittelpackung an dem Sensor (25) vorbei geführt wurde.

8. Verfahren zum Auslagern von Arzneimittelpackungen nach Anspruch 2, wobei nach dem Ermitteln eines für die Oberkante (11") des Regalbodens charakteristischen Signals das Bediengerät weiter nach unten verfahren wird, ein für die Unterkante (11"') charakteristisches Signal ermittelt und anhand der ermittelten Signale eine Plausibilitätsprüfung durchgeführt wird, und, sofern die Plausibilitätsprüfung positiv ist, das Bediengerät (20) an eine der Oberkante (11") des Regalbodens (11) entsprechende Regalposition verfahren wird.

9. Verfahren zum Auslagern von Arzneimittelpackungen nach Anspruch 1 oder 3, wobei, sofern die Prüfung dahingehend, ob die zumindest eine Arzneimittelpackung vollständig auf die Auflage bewegt ist, negativ ausfällt,
die zumindest eine Arzneimittelpackung mit der Greifvorrichtung (22) derart von der Auflage weg bewegt wird, dass die zumindest eine Arzneimittelpackung (30) keinen Kontakt zu der Stirnfläche der Auflage (21) hat.

10. Verfahren zum Auslagern von Arzneimittelpackungen nach Anspruch 1, wobei, sofern die Prüfung dahingehend, ob die zumindest eine Arzneimittelpackung vollständig auf die Auflage bewegt ist, negativ ausfällt,
die zumindest eine Arzneimittelpackung mit der Greifvorrichtung derart von der Auflage weg bewegt wird, dass die Oberkante (11") des Regalbodens (11) freigegeben ist, bevor die Greifvorrichtung (22) in die Verfahrstellung gebracht wird,
das Bediengerät (20) nach unten verfahren wird, bis mit dem Sensor (23) ein die Oberkante (11") des Regalbodens (11) charakterisierendes Signal ermittelt wird, und, sofern erforderlich, das Bediengerät dann zu einer entsprechenden Regalposition verfahren wird, bei welcher die zumindest eine Arzneimittelpackung ausgelagert wird.

11. Verfahren zum Auslagern von Arzneimittelpackungen (30) aus einer Apothekenkommissioniervorrichtung mit
zumindest einer Regalreihe mit jeweils einer Mehrzahl von sich in einer horizontalen Richtung erstreckenden Regalböden (11) und einer Mehrzahl von sich in einer vertikalen Richtung ersteckenden Regalwänden (12),
zumindest einem vor der Regalreihe horizontal und vertikal verfahrbaren Bediengerät (20), wobei das Bediengerät (20) eine Greifvorrichtung (22) zum Ein- und/oder Auslagern von Arzneimittelpackungen (30) auf die bzw. von den Regalböden (11), eine Auflage (21) mit einer Auflagefläche (21') sowie einen Sensor (23) umfasst,
wobei das Bediengerätes (20) in einer Verfahrstellung zu einer vorgegebenen Regalposition verfahren wird, bei welcher die zumindest eine Arzneimittelpackung von dem entsprechenden eine Unterseite (13) aufweisenden Regalboden (11) ausgelagert werden soll, **dadurch gekennzeichnet, daß** der Sensor (23) unter der Auflage angeordnet ist, daß
mit dem Sensor (23) der Abstand A_{I} zu der Unterseite (13) des Regalbodens (11) ermittelt wird, daß der Abstand A_{I} mit einem Sollwert für den Abstand zwischen dem Sensor (23) und der Unterseite (13) des Regalbodens (11) verglichen wird, und daß
falls eine einen Grenzwert überschreitende Abweichung zwischen dem ermittelten Abstand A_{I} und dem Sollwert A_{S} vorliegt, das Bediengerät um einen entsprechenden Betrag vertikal zu einer korrigierten Regalposition verfahren wird und mit der Greifvorrichtung (22) die zumindest eine Arzneimittelpackung (30) auf dem der Regalposition zugehörigen Regalboden (11) in Richtung Auflage (21) bewegt wird.

## Claims

1. A method of removing medicine packages (30) from a pharmacy order picking system with
at least one row of shelves each having a plurality of shelf bases (11) extending in a horizontal direction and a plurality of shelf walls (12) extending in a vertical direction,
at least one operating device (20) which can be moved horizontally and vertically in front of the row of shelves, wherein the operating device (20) comprises a gripper device (22) for the putting into and/or taking out of stock of medicine packages (30) onto or from the shelf bases (11), a sensor (23), as well as a holder (21) with a holder surface (21')
wherein in a move setting the operating device (20) is moved to a predetermined shelf position
wherein with the gripper device (22) the at least one medicine package (30) on the shelf base (11) corresponding with shelf position is moved in the direction of the holder (21),
**characterised in that** it is checked whether the at least one medicine package (30) has been moved completely onto the holder (21), and if the result of the check is negative,
with the sensor (23), an edge (11" , 11"') of the shelf base (11) on which the at least one medicine package is stored is determined and the operating device (20) is moved to a corresponding shelf position, wherein the gripper device (22) has been brought into the move setting before moving.

2. The method of removing medicine packages in accordance with claim 1, wherein an upper edge (11") of the shelf base (11) is determined and the operating device (20) is moved to a corresponding shelf position in that the operating device (20) is initially moved horizontally until the sensor (23) detects an area next to the at least one medicine package (30) to be removed, the operating device (20) then being moved downwards until with the sensor (23) a signal characterising the upper edge (11") of the shelf base (11) is detected whereupon the operating device (20) is then moved to a corresponding shelf position at which the medicine package is removed.

3. The method of removing medicine packages in accordance with claim 1, wherein a lower edge (11"') of the shelf base (11) is determined and the operating device (20) is moved to a corresponding shelf position in that the operating device (20) is moved vertically until with the sensor (23) a signal characterising the lower edge (11"') of the shelf base (11) is detected whereupon the operating device is then moved to a corresponding shelf position at which the medicine package is removed.

4. The method of removing medicine packages in accordance with claim 1, wherein an edge (11", 11"') of the shelf base (11) is determined and the operating device (20) is moved to a corresponding shelf position, in that with the sensor (23) an actual value of an edge (11", 11"') of the shelf base (11) is initially determined, the actual value compared with a specified value and the operating device (20) is moved vertically by the value corresponding to the determined difference.

5. The method of removing medicine packages according to any one of claims 1 - 4, wherein the operating device is moved in such a way that the holder surface (21') is horizontally flush with or lower by an amount (Z) than the shelf base surface (11') of the shelf base (11) on which the at least one medicine package to be removed is arranged.

6. The method of removing medicine packages according to any one of claims 1 - 5, wherein it is checked whether the at least one medicine package (30) has been moved completely onto the holder (21), in that with a sensor (24) the length of the at least one medicine package (30) being moved into the holder is determined and compared with a specified value, wherein a deviation from the specified value indicates that the at least one medicine package (30) has not been moved completely onto the holder (21).

7. The method of removing medicine packages according to any one of claims 1 - 5, wherein it is checked whether the at least one medicine package (30) has been moved completely onto the holder (21), in that with a sensor (25) it is checked whether the at least one medicine package has been moved past the sensor (25).

8. The method of removing medicine packages according to claim 2 wherein after determining a characteristic signal for the upper edge (11") of the shelve base, the operating device is moved further downwards, a characteristic signal for the lower edge (11"') is determined and by way of the determined signals a plausibility check is carried out, and, if the result of the plausibility check is positive, the operating device (20) is moved to a shelf position corresponding to the upper edge (11") of the shelf base (11).

9. The method of removing medicine packages according to claim 1 or 3 wherein, if the result of the check to determine whether the at least one medicine package has been moved completely onto the holder is negative,
the at least one medicine package is moved away from the holder by the gripper device (22) in such a way that the at least one medicine package (30) is not in contact with the end face of the holder (21).

10. The method of removing medicine packages according to claim 1 wherein, if the result of the check to determine whether the at least one medicine package has been moved completely onto the holder is negative,
the at least one medicine package is moved away from the holder by the gripper device (22) in such a way that the upper edge (11") of the shelf base (11) is cleared before the gripper device (22) is brought into the move setting
the operating device (20) is moved downwards until with the sensor (23) a signal characterising the upper edge (11") of the shelf base (11) is determined, and, if required, the operating element is then moved to a corresponding shelf position at which the at least one medicine package is removed.

11. The method of removing medicine packages (30) from a pharmacy order picking system with
at least one row of shelves each having a plurality of shelf bases (11) extending in a horizontal direction and a plurality of shelf walls (12) extending in a vertical direction,
at least one operating device (20) which can be moved horizontally and vertically in front of the row of shelves, wherein the operating device (20) comprises a gripper device (22) for the putting into and/or taking out of stock of medicine packages (30) onto or from the shelf bases (11), a holder (21) with a holder surface (21') as well as a sensor (23),
wherein in a move setting the operating device (20) is moved to a predetermined shelf position at which the at least one medicine package is to be removed from the corresponding shelf base (11), which has an underside (13), **characterised in that** the sensor (23) is arranged under the holder,
that with the sensor (23) the distance A_{I} to the underside (13) of the shelf base (11) is determined,
that the distance A_{I} is compared with a specified value for the distance between the sensor (23) and the underside (13) of the shelf base (11) and that
in the event of a difference between the determined distance A_{I} and the specified value A_{S} that exceeds a limit value, the operating device (20) is moved vertically by a corresponding amount to the correct shelf position and with the gripper device (22) the at least one medicine pack (30) is moved from the shelf base (11) corresponding to the shelf position in the direction of the holder (21).

## Revendications

1. Procédé destiné à déstocker des emballages de médicaments (30) hors d'un dispositif de préparation pharmaceutique, comportant
au moins une série de rayonnages comprenant respectivement une pluralité de fonds de rayonnages (11) s'étendant dans un sens horizontal et une pluralité de parois de rayonnages (12) s'étendant dans un sens vertical,
au moins un appareil de manoeuvre (20) déplaçable horizontalement et verticalement devant la série de rayonnages, l'appareil de manoeuvre (20) comprenant un dispositif préhenseur (22) pour stocker et/ou déstocker des emballages de médicaments (30) sur ou hors des fonds de rayonnages (11), un capteur (23) ainsi qu'un support (21) comportant une surface d'appui (21'),
l'appareil de manoeuvre (20) étant, en position de déplacement, déplacé vers une position de rayonnage prédéfinie,
l'au moins un emballage de médicament (30) étant déplacé sur le fond de rayonnage (11) correspondant à la position de rayonnage en direction du support (21) avec le dispositif préhenseur (22),
**caractérisé en ce qu'**il est contrôlé si l'au moins un emballage de médicament (30) est déplacé entièrement sur le dessus du support (21) et, si le contrôle est négatif,
le capteur (23) détecte un bord (11", 11"') du fond de rayonnage (11) sur lequel l'au moins un emballage de médicament est stocké et l'appareil de manoeuvre (20) est déplacé vers une position de rayonnage correspondante, le dispositif préhenseur (22) ayant été amené en position de déplacement avant le déplacement.

2. Procédé destiné à déstocker des emballages de médicaments selon la revendication 1, dans lequel un bord supérieur (11') du fond de rayonnage (11) est détecté et l'appareil de manoeuvre (20) est déplacé vers une position de rayonnage correspondante par le fait que l'appareil de manoeuvre (20) est d'abord déplacé horizontalement jusqu'à ce que le capteur (23) détecte une zone proche de l'au moins un emballage de médicament (30) à déstocker, l'appareil de manoeuvre (20) est ensuite déplacé vers le bas jusqu'à ce que le capteur (23) détermine un signal caractérisant le bord supérieur (11') du fond de rayonnage (11) et l'appareil de manoeuvre (20) est ensuite déplacé vers une position de rayonnage correspondante dans laquelle l'emballage de médicament est déstocké.

3. Procédé destiné à déstocker des emballages de médicaments selon la revendication 1, dans lequel un bord inférieur (11"') du fond de rayonnage (11) est détecté et l'appareil de manoeuvre (20) est déplacé vers une position de rayonnage correspondante par le fait que l'appareil de manoeuvre est déplacé verticalement jusqu'à ce que le capteur (23) détecte un signal caractérisant le bord inférieur (11"') du fond de rayonnage (11) et l'appareil de manoeuvre (20) est ensuite déplacé vers une position de rayonnage correspondante dans laquelle l'emballage de médicament est déstocké.

4. Procédé destiné à déstocker des emballages de médicaments selon la revendication 1, dans lequel un bord (11" , 11"') du fond de rayonnage (11) est détecté et l'appareil de manoeuvre est déplacé vers une position de rayonnage correspondante par le fait que le capteur (23) détermine d'abord une valeur réelle d'un bord (11", 11"') du fond de rayonnage (11), que la valeur réelle est comparée à une valeur théorique et que l'appareil de manoeuvre (20) est déplacé verticalement à raison d'une valeur correspondant à l'écart détecté.

5. Procédé destiné à déstocker des emballages de médicaments selon une des revendications 1 à 4, dans lequel l'appareil de manoeuvre est déplacé de manière à ce que la surface d'appui (21') soit alignée horizontalement avec une surface de fond de rayonnage (11') du fond de rayonnage (11) sur lequel l'au moins un emballage de médicament à déstocker s'appuie ou soit disposée plus bas à raison d'une valeur (Z).

6. Procédé destiné à déstocker des emballages de médicaments selon une des revendications 1 à 5, dans lequel il est contrôlé si l'au moins un emballage de médicament (30) a été entièrement déplacé vers le dessus du support (21) par le fait qu'un capteur (24) détermine la longueur de l'au moins un emballage de médicament (30) déplacé vers le dessus du support et la compare à une valeur théorique, un écart par rapport à une valeur théorique indiquant que l'au moins un emballage de médicament (30) n'a pas été déplacé entièrement vers le dessus du support (21).

7. Procédé destiné à déstocker des emballages de médicaments selon une des revendications 1 à 5, dans lequel il est contrôlé si l'au moins un emballage de médicament (30) a été entièrement déplacé vers le dessus du support (21) par le fait qu'un capteur (25) contrôle si l'au moins un emballage de médicament est passé devant le capteur (25).

8. Procédé destiné à déstocker des emballages de médicaments selon la revendication 2, dans lequel, après détection d'un signal caractéristique du bord supérieur (11") du fond de rayonnage, l'appareil de manoeuvre est déplacé plus loin vers le bas, un signal caractéristique du bord inférieur (11"') est détecté et, en partant des signaux détectés, un contrôle de plausibilité est réalisé et, dans la mesure où le contrôle de plausibilité est positif, l'appareil de manoeuvre (20) est déplacé vers une position de rayonnage correspondant au bord supérieur (11") du fond de rayonnage (11) .

9. Procédé destiné à déstocker des emballages de médicaments selon la revendication 1 ou 3, dans lequel, dans le cas où le contrôle du déplacement complet de l'au moins un emballage de médicament vers le dessus du support est négatif,
l'au moins un emballage de médicament est éloigné du support par le dispositif préhenseur (22) de manière à ce que l'au moins un emballage de médicament (30) ne soit pas en contact avec la surface frontale du support (21) .

10. Procédé destiné à déstocker des emballages de médicaments selon la revendication 1, dans lequel, dans le cas où le contrôle du déplacement complet de l'au moins un emballage de médicament vers le dessus du support est négatif,
l'au moins un emballage de médicament est éloigné du support par le dispositif préhenseur (22) de manière à ce que le bord supérieur (11") du fond de rayonnage (11) soit dégagé avant que le dispositif préhenseur (22) soit amené dans la position de déplacement,
l'appareil de manoeuvre (20) est déplacé vers le bas jusqu'à ce que le capteur (23) détecte un signal caractérisant le bord supérieur (11") du fond de rayonnage (11) et, si nécessaire, l'appareil de manoeuvre (20) est ensuite déplacé vers une position de rayonnage correspondante dans laquelle l'au moins un emballage de médicament est déstocké.

11. Procédé destiné à déstocker des emballages de médicaments (30) hors d'un dispositif de préparation pharmaceutique, comportant
au moins une série de rayonnages comprenant respectivement une pluralité de fonds de rayonnages (11) s'étendant dans un sens horizontal et une pluralité de parois de rayonnages (12) s'étendant dans un sens vertical,
au moins un appareil de manoeuvre (20) déplaçable horizontalement et verticalement, l'appareil de manoeuvre (20) comprenant un dispositif préhenseur (22) pour stocker et/ou déstocker les emballages de médicaments (30) sur ou hors des fonds de rayonnages (11), un support (21) comportant une surface d'appui (21') ainsi qu'un capteur (23),
l'appareil de manoeuvre (20) étant, en position de déplacement, déplacé vers une position de rayonnage prédéfinie dans laquelle l'au moins un emballage de médicament doit être déstocké depuis le fond de rayonnage (11) correspondant présentant une face inférieure (13),
**caractérisé en ce que** le capteur (23) est disposé sous le support, que le capteur (23) détecte la distance A_{I} par rapport à la face inférieure (13) du fond de rayonnage (11),
que la distance A_{I} est comparée à une valeur théorique pour la distance entre le capteur (23) et la face inférieure (13) du fond de rayonnage (11) et que,
si un écart dépassant une valeur limite entre la distance détectée A_{I} et la distance théorique A_{S} existe, l'appareil de manoeuvre (20) est déplacé verticalement à raison d'une valeur correspondante vers une position de rayonnage corrigée et l'au moins un emballage de médicament (30) est déplacé sur le fond de rayonnage (11) correspondant à la position de rayonnage en direction du support (21) à l'aide du dispositif préhenseur (22).
